Europäisches Patentamt

European Patent Office

Office européen des brevets

(19)

(11) **EP 0 825 542 B1**

(12) **FASCICULE DE BREVET EUROPEEN**

(45) Date de publication et mention
de la délivrance du brevet:
**24.11.2004 Bulletin 2004/48**

(51) Int Cl.[7]: **G06F 17/30**

(21) Numéro de dépôt: **97401941.6**

(22) Date de dépôt: **18.08.1997**

(54) **Méthode pour synchroniser la présentation de composantes statiques et dynamiques d'un document multimédia interactif**

Verfahren um die Präsentation von statischen und dynamischen Komponenten eines interaktiven Multimediadokuments zu synchronisieren

Method for synchronizing the presentation of static and dynamic components of an interactive multimedia document

(84) Etats contractants désignés:
**CH DE ES GB IT LI NL**

(30) Priorité: **21.08.1996 FR 9610336**

(43) Date de publication de la demande:
**25.02.1998 Bulletin 1998/09**

(73) Titulaire: **Alcatel Alsthom
Compagnie Générale d'Electricité
75008 Paris (FR)**

(72) Inventeur: **Baleh, Farid
91190 Gif sur Yvette (FR)**

(74) Mandataire: **Lamoureux, Bernard et al
Compagnie Financière Alcatel,
Département de Propriété Industrielle,
5, rue Noel Pons
92734 Nanterre Cedex (FR)**

(56) Documents cités:
- FUNG C -L ET AL: "MOCS: AN OBJECT-ORIENTED PROGRAMMING MODEL FOR MULTIMEDIA OBJECT COMMUNICATION AND SYNCHRONIZATION" PROCEEDINGS OF THE INTERNATIONAL CONFERENCE ON DISTRIBUTED COMPUTIN SYSTEMS, POZNAN, POLAND, JUNE 21 - 24, 1994, no. CONF. 14, 21 juin 1994 (1994-06-21), pages 494-501, XP000489112 INSTITUTE OF ELECTRICAL AND ELECTRONICS ENGINEERS
- TAKESHI YONEDA ET AL: "CONSTRUCTING A SYSTEM USING TIME DEPENDENT MULTIMEDIA DOCUMENT" PROCEEDINGS OF THE ANNUAL INTERNATIONAL PHOENIX CONFERENCE ON COMPUTERS AND COMMUNICATIONS, SCOTTSDALE, APR. 1 - 3, 1992, no. CONF. 11, 1 avril 1992 (1992-04-01), pages 140-147, XP000310603 INSTITUTE OF ELECTRICAL AND ELECTRONICS ENGINEERS
- BLAKOWSKI G ET AL: "TOOL SUPPORT FOR THE SYNCHRONIZATION AND PRESENTATION OF DISTRIBUTED MULTIMEDIA" COMPUTER COMMUNICATIONS, vol. 15, no. 10, 1 décembre 1992 (1992-12-01), pages 611-618, XP000321682

## Description

L'invention porte sur une méthode pour synchroniser dans un système de présentation de documents multimédia interactifs, la présentation de composantes à caractère dynamique et de composantes à caractère statique d'un tel document.

Elle s'applique en particulier à un système de présentation de documents multimédia interactifs utilisé en milieux hospitalier pour la constitution et l'utilisation d'une base documentaire interactive d'actes ou des gestes chirurgicaux.

Le multimédia met en oeuvre des informations de natures différentes : séquences vidéo animées, son, textes, images graphiques, images vidéo fixes, etc.

D'un point de vue temporel, ces différentes informations peuvent être classées selon deux catégories :

- les informations dites à caractère dynamique dont la présentation est par nature associée à un temps d'affichage ; c'est le cas de la vidéo animée et du son. Ces informations sont généralement stockées sur des supports physiques (serveur vidéo, serveur audio, vidéodisque, bande magnétique, etc.) avec une base de temps codé ou « time code ». Par exemple, l'enregistrement de la vidéo animée sur un vidéodisque implique de stocker conjointement un numéro d'image (sur la base de 25 images par seconde dans les standards vidéo européens) avec chacune des images fixes qui la compose ;

- les informations dites à caractère statique dont la présentation n'est pas fondamentalement associée à un temps d'affichage ; c'est le cas du texte, de l'image graphique ou vidéo fixe. Ces informations sont stockées sur des supports physiques sans base de temps associée.

Le document « *Tool Support for the Synchronization and Presentation of Distributed Multimedia* » Computer Communications, vol 15 no 10, December 1992, *de G. Blakowski*, *Ulrike Langrehr et Max Mülhäuser* divulgue un mécanisme de synchronisation au sein d'une trame vidéo, mais ce mécanisme ne peut être mis en oeuvre pour la présentation d'un document multimédia.

Les documents « *MOCS: An Object-Oriented Programming Model for Multimedia Object Communication and Synchronization* » IEEE, June 1994, de Chi-Leung Fung et Man-Chi Pong et *« Constructing a System Using Time Dependent Multimedia Document* » IEEE, IPCCC, April 1992, de Takeshi Yoneda et Yutaka Matsushita divulguent des mécanismes pour synchroniser des objets multimédias, mais cette synchronisation ne porte que sur les déclenchements de ces objets, les uns par rapport aux autres. Il n'est par exemple pas divulgué comment gérer les documents multimédias interactifs, dont la vitesse d'affichage peut varier.

Dans un document multimédia, certaines informations à caractère statique peuvent être présentées en même temps que certaines autres informations à caractère dynamique. Lorsque le document multimédia est interactif, c'est-à-dire avec possibilité pour l'utilisateur de changer la vitesse de présentation du document, le problème est de pouvoir coordonner la présentation de ces diverses composantes notamment quand l'utilisateur change la vitesse de présentation du document multimédia.

Suivant le futur standard MHEG (Multimedia and Hypermedia Expert Group - ISO/IEC DIS 13522-1), un document multimédia, dans un système de présentation de documents multimédia interactifs, doit être représenté suivant un modèle orienté objet.

Le but de l'invention est de proposer une méthode, adaptée au futur standard MHEG, pour synchroniser dans un système de présentation de documents multimédia interactifs, la présentation de composantes à caractère dynamique et de composantes à caractère statique d'un tel document afin d'obtenir un comportement temporel harmonieux de ces composantes à caractère dynamique et statique quand l'utilisateur interagit avec le système de présentation pour modifier la vitesse de présentation du document multimédia.

Un autre but de l'invention est de proposer une telle méthode qui soit simple à implémenter en programmation objet.

A cet effet, l'invention a pour objet une méthode pour synchroniser dans un système de présentation de documents multimédia interactifs, la présentation de composantes à caractère dynamique et de composantes à caractère statique d'un tel document, caractérisée par les étapes consistant à:

- représenter, dans le système de présentation de documents multimédia interactifs, le document et ses composantes dynamiques et statiques suivant un modèle orienté objet pour définir le document multimédia interactif sous la forme d'un premier objet dit objet multimédia racine, chaque composante à caractère dynamique de ce document sous la forme d'un second objet dit objet monomédia dynamique et chaque composante à caractère statique de ce document sous la forme d'un troisième objet dit objet monomédia statique,

- fournir dans l'objet multimédia racine et dans chaque objet monomédia dynamique ou statique des premières données de synchronisation relatives à des instants de présentation du document dans un référentiel temporel logique pour une certaine vitesse de présentation du document multimédia, ce référentiel temporel logique étant dérivé d'un référentiel temporel codé fourni par un support d'enregistrement des composantes à caractère dynamique du document,

- fournir dans l'objet multimédia racine et dans chaque objet monomédia statique une seconde donnée de synchronisation relative à un instant de changement de vitesse de présentation du document dans le référentiel temporel logique,

- fournir dans l'objet multimédia racine et dans chaque objet monomédia statique une troisième donnée de synchronisation relative à un instant de présentation du document dans un référentiel temporel physique fourni par une horloge,

- fournir dans l'objet multimédia racine et dans chaque objet monomédia statique une quatrième donnée de synchronisation relative à un instant de changement de vitesse de présentation du document dans le référentiel temporel physique,

- fournir dans chaque objet monomédia dynamique des cinquièmes données de synchronisation relatives à des instants de présentation du document dans le référentiel temporel codé, et

- traiter ces différentes données de synchronisation à chaque changement de vitesse de présentation du document multimédia pour coordonner la présentation des composantes à caractère dynamique et des composantes à caractère statique de celui-ci.

Un exemple de mise en oeuvre de la méthode selon l'invention est décrit plus en détails ci-après en référence aux dessins.

La figure 1 illustre schématiquement un système de présentation de documents multimédia pour la mise oeuvre de la méthode selon l'invention.

La figure 2 illustre la représentation objet d'un document dans le système à partir d'un exemple simple d'un document multimédia ayant une composante à caractère statique et une composante à caractère dynamique.

La figure 3 illustre le scénario du document de la figure 2.

La figure 4 illustre les données de synchronisation présentes dans les objets.

La figure 5 représente dans le référentiel temporel logique, le objets de la figure 4.

La figure 6 est un organigramme du traitement appliqué sur les données de synchronisation.

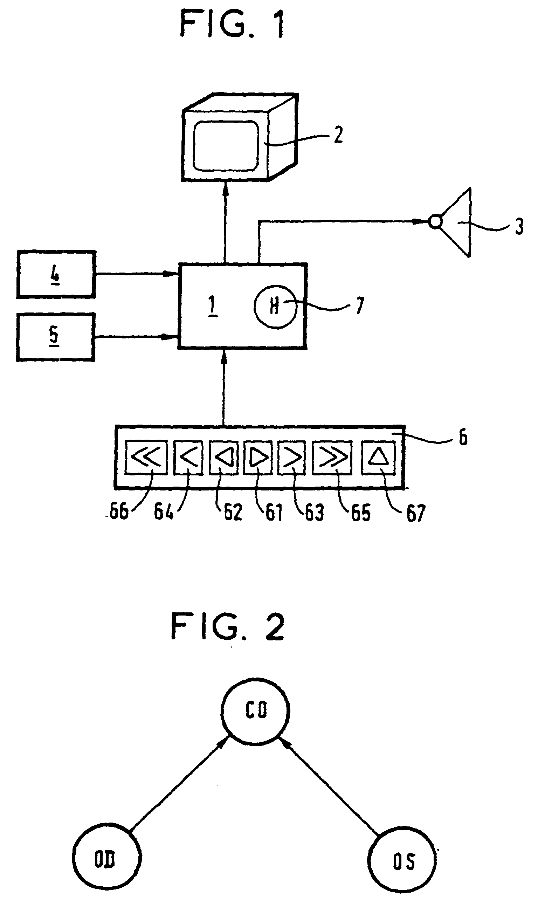

Figure 1, un système de présentation d'un document multimédia interactif montré de façon très schématique, comprend classiquement une unité centrale 1 connectée à un écran d'affichage 2 permettant de restituer des informations visuelles (images vidéo animées ou non, texte, graphiques etc.) et à un haut parleur 3 permettant de restituer des informations sonores.

Dans le cadre de l'invention, le document multimédia comprend des informations à caractère dynamique et des informations à caractère statique pouvant être présentées simultanément. Les informations visuelles ou sonores à caractère dynamique sont stockées sur un support d'enregistrement avec une base de temps codé, dans l'exemple un vidéodisque 4, tandis que les informations à caractère statique comme une image fixe ou du texte sont stockées sur un autre support sans base de temps codée, par exemple dans la mémoire de masse de l'unité centrale 1 ou sur tout autre support analogue 5.

L'unité centrale 1 est aussi connectée à un clavier de commande 6 permettant à l'utilisateur du système d'agir sur le déroulement de la présentation du document multimédia par l'intermédiaire d'une série de touches de fonction telles que :

- les touche 61 et 62 d'avance normale respectivement en avant et en arrière à une vitesse de 25 images par seconde,

- les touches 63 et 64 d'avance lente respectivement en avant et en arrière à une vitesse inférieure à 25 images par seconde,

- les touches 65 et 66 d'avance rapide respectivement en avant et en arrière à une vitesse supérieure à 25 images par seconde,

- et la touche 67 d'arrêt de la présentation (touche pause).

L'application d'un système de présentation d'un document multimédia interactif, suivant le futur standard « MHEG », repose sur une approche orientée objet pour la description de la structure du document multimédia et sur un moteur logiciel multimédia, qui à partir de cette représentation objet, est chargé de récupérer les différentes composantes du documents sur leur support de stockage respectif et de présenter chaque composante à l'utilisateur du système via les périphériques 2 et 3.

Figure 2, dans le cadre de la méthode selon l'invention, le document multimédia est représenté, dans le système de présentation 1, suivant un modèle orienté objet pour définir le document multimédia sous la forme d'un premier objet dit objet multimédia racine CO, chaque composante à caractère dynamique du document sous la forme d'un second objet OD dit objet monomédia dynamique et chaque composante à caractère statique du document sous la forme d'un troisième objet OS dit objet monomédia statique.

Sur la figure 2, le document multimédia pris à titre d'exemple et représenté suivant le modèle orienté objet est relativement simple puisqu'il comporte seulement une composante à caractère dynamique, par exemple une séquence audiovisuelle, correspondant à l'objet OD et une composante à caractère statique, par exemple un texte, correspondant à l'objet OS. Il est évident que l'invention s'applique à des documents multimédia interactifs beaucoup plus complexes comportant plusieurs composantes à caractère dynamique ou statique.

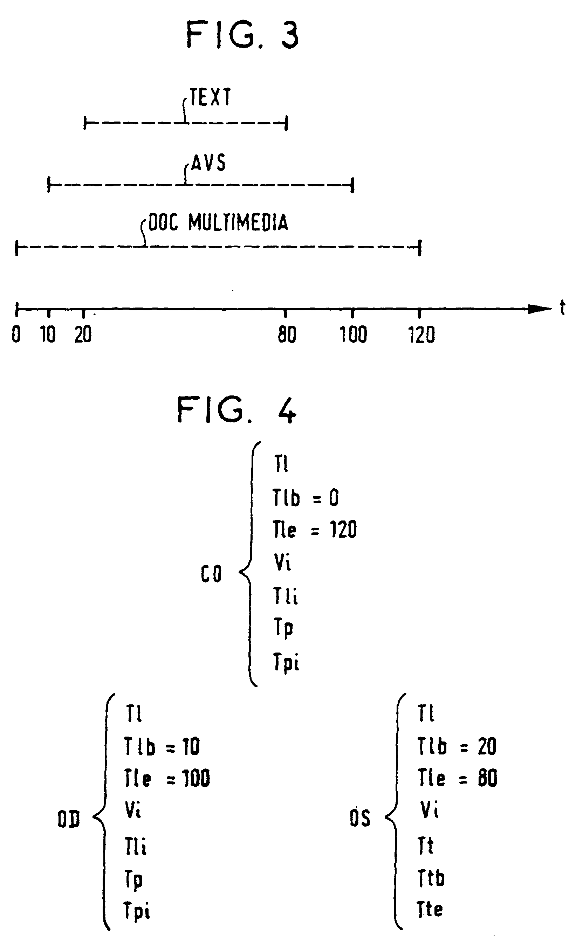

Figure 3, le scénario du document multimédia pris à titre d'exemple est montré dans une base de temps ayant la seconde comme unité. On voit sur cette figure que la présentation du document multimédia commence à l'origine 0 de l'axe des temps et se termine après une période de 120 secondes par exemple. La présentation de la séquence audiovisuelle AVS commence au temps t de 10 secondes et se termine au temps t de 100 secondes par exemple. La présentation du texte TEXT commence au temps t de 20 secondes et se termine au temps t de 80 secondes. On considérera que la séquence audiovisuelle AVS est stockée sur le vidéodisque 4 du système de la figure 1. Elle commence avec une première image qui porte le numéro 7000 et finie par une image qui porte le numéro 9250. La durée de cette séquence audiovisuelle est donc de 2250 images, soit 90 secondes à raison de 25 images par seconde. Ces numéros d'image, qui sont fournis par le support d'enregistrement de la séquence AVS, définissent le référentiel temporel codé.

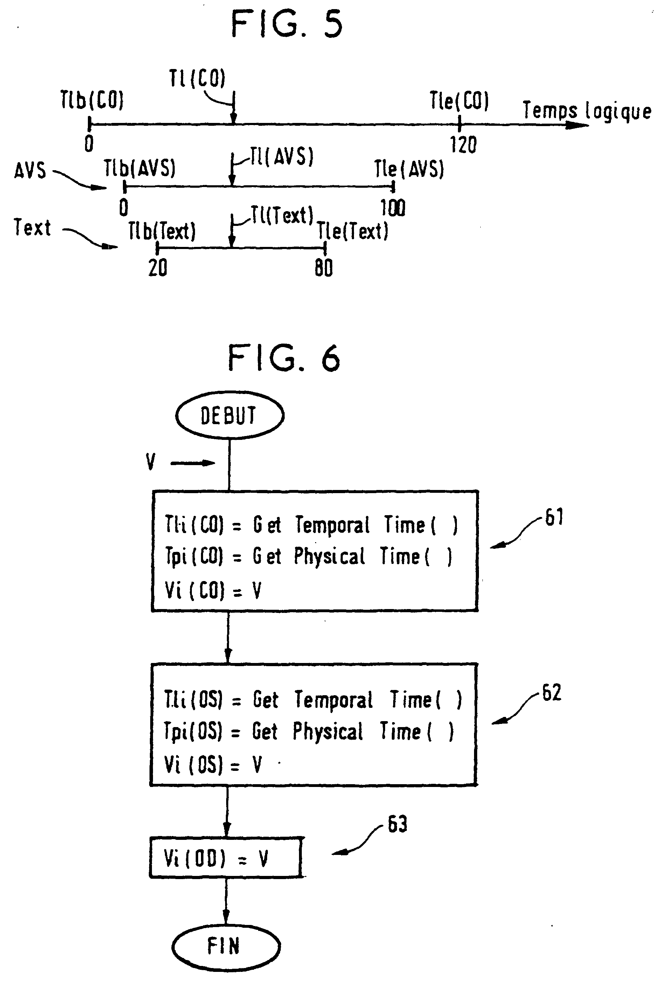

Figure 4, au niveau de l'objet multimédia et de chaque objet monomédia, on fournit une série de données de synchronisation qui correspondent chacune à un attribut d'objet. L'idée à la base de l'invention est de définir, à travers ces données de synchronisation, un référentiel temporel logique qui est commun à l'objet multimédia racine et aux objets monomédia statiques ou dynamiques de telle sorte à pouvoir coordonner la présentation des informations à caractère dynamique et les informations à caractère statique lors d'un changement de la vitesse de présentation du document multimédia.

Plus particulièrement, sur cette figure, on voit que l'objet CO et les objets OD et OS ont des données de synchronisation communes TI,Tlb,Tle et Vi.

TI est relatif à un instant courant de présentation dans le référentiel logique - instant courant de présentation du document multimédia pour l'objet CO - instant courant de présentation de la composante AVS pour l'objet OD - instant courant de présentation de la composante TEXT pour l'objet OS ;

Tlb est relatif à un instant de début de présentation dans le référentiel logique - instant de début de présentation du document multimédia pour l'objet CO - instant de début de présentation de la composante AVS pour l'objet OD - instant de début de présentation de la composante TEXT pour l'objet OS ;

Tle, est relatif à un instant de fin de présentation dans le référentiel logique - instant de fin de présentation du document multimédia pour l'objet CO - instant de fin de présentation de la composante AVS pour l'objet OD - instant de fin de présentation de la composante TEXT pour l'objet OS ;

Vi est relatif à la vitesse courante de présentation dans le référentiel temporel logique - vitesse courante de présentation du document multimédia pour l'objet CO - vitesse courante de présentation de la composante AVS pour l'objet OD - vitesse courante de présentation de la composante TEXT pour l'objet OS (normalement égale à 25 images par seconde).

Dans le cas de l'exemple de la figure 3, on a Tlb(CO) qui est égale à 0 et Tle(CO) qui est égale à 120.

Ensuite, on a Tlb(OS) qui est égale à 20 et Tle(OS) qui est égale à 80. Enfin, on a Tlb(OD) qui est égale à 10 et Tle(OD) qui est égale à 100. Ces données de synchronisation restent fixes pendant la présentation du document multimédia.

Par ailleurs, les objets multimédia CO et statique OS ont une seconde donnée de synchronisation Tli relative à un instant de changement de vitesse de présentation dans le référentiel temporel logique, une troisième donnée de synchronisation Tp relative à un instant courant de présentation dans un autre référentiel temporel dit référentiel temporel physique - instant de présentation du document multimédia pour l'objet CO - instant de présentation de la composante TEXT pour l'objet OS, et une quatrième donnée de synchronisation Tpi relative à un instant de changement de vitesse de présentation dans le référentiel temporel physique - instant de changement de vitesse de présentation du document multimédia pour l'objet CO - instant de changement de vitesse de présentation de la composante TEXT pour l'objet OS.

Ce référentiel temporel physique est fourni par une horloge 7 montrée sur la figure 1. Il s'agit de l'horloge interne de l'unité 1.

Enfin, l'objet OD a des cinquièmes données de synchronisation Tt,Ttb et Tte relatives à des instants de présentation de la composante à caractère dynamique AVS dans le référentiel temporel codé.

Tt est relatif à un instant courant de présentation de la composante AVS dans ce référentiel temporel codé ;

Ttb est relatif à l'instant de début de présentation de la composante AVS dans ce référentiel temporel codé,

et Tte est relatif à l'instant de fin de présentation de la composante AVS dans ce référentiel temporel codé.

Pour la séquence AVS prise à titre d'exemple, on a Ttb(OD) qui est égale à 7000 et Tte(OD) qui est égale à 9250. Ces données de synchronisation restent fixes pendant la présentation du document.

La Figure 5 donne une représentation des objets CO,OD et OS dans le référentiel temporel logique. On voit que l'objet CO démarre au temps logique t=0 et s'arrête au temps logique t=120 - l'objet OD démarre au temps logique t=10 et s'arrête au temps logique t=100 - l'objet OS démarre au temps logique t=20 et s'arrête au temps logique t=80. Il faut comprendre ici, que le démarrage ou l'arrêt de l'objet monomédia dynamique correspondent en fait au lancement et à l'arrêt de la présentation de la séquence audiovisuelle. Le lancement et l'arrêt de l'objet monomédia statique correspondent au lancement de l'affichage du texte et à l'effacement de celui-ci à l'écran.

Pour coordonner ces phases de démarrage et d'arrêt même en cas de changement de la vitesse de présentation, il faut calquer le comportement temporel de l'objet ou des objets monomédia statiques tels que OS sur le comportement temporel de l'objet ou des objets monomédia dynamiques OD.

Ainsi, en cas de changement de vitesse de présentation du document multimédia demandé par l'utilisateur, via une des touches fonction 61 à 67, un traitement est appliqué sur les données de synchronisation pour maintenir une cohérence au niveau de la présentation des différentes composantes.

Par exemple, si on se trouve à l'instant logique Tl compris entre 20 et 80 secondes sur la figure 5, c'est-à-dire quand la séquence audiovisuelle AVS et le texte TEXT sont en cours de présentation avec une certaine vitesse, et que l'utilisateur sélectionne une des touches servant à modifier cette vitesse de présentation (63 par exemple), le moteur multimédia applique les traitements illustrés par l'organigramme de la figure 6.

Quand l'événement de changement de vitesse de présentation à la vitesse V est pris en compte, un premier traitement 61 est effectué sur les attributs de l'objet CO pour mettre à jour Tli(CO) via une méthode objet GetTemporalTime() qui fournit la valeur du temps logique courant Tl(CO), mettre à jour Tpi(CO) via une méthode objet GetPhysicalTime() qui fournit l'heure courante donnée par l'horloge 7 et Vi(CO).

Un second traitement est effectué sur les attributs de l'objet OS pour mettre à jour Tli(OS) via une autre méthode objet GetTemporalTime() qui fournit la valeur du temps logique courant Tl(OS), mettre à jour Tpi(OS) via une méthode objet GetPhysicalTime() qui fournit l'heure courante donnée par l'horloge 7 et Vi(OS).

Pour les objets CO et OS, la méthode GetTemporalPosition() retourne une valeur de position temporelle logique sur la base de la relation suivante :

$Tl = Tli + (Tp - Tpi).Vi/VN$ ou Vi est la valeur de la vitesse de présentation lors du dernier changement de vitesse et VN est à la valeur de la vitesse normale de présentation (25 images par seconde dans les standards vidéo européens). On voit que la nouvelle position temporelle logique courante de l'objet CO ou OS est égale à la position temporelle logique de l'objet considéré au dernier changement de vitesse augmentée de l'intervalle de temps entre la position temporelle physique de l'objet considéré au dernier changement de vitesse et la position temporelle physique courante donnée par l'horloge, cet intervalle de temps étant en plus corrigé par un facteur multiplicateur (Vi/VN) tenant compte de la variation de vitesse entre ces deux instants physiques.

Un troisième traitement 63 est effectué sur les attributs de l'objet OD pour mettre à jour Vi(OD) et lancer une routine pour commander le changement de vitesse de lecture du lecteur du support 4.

Pour l'objet OD, la méthode GetTemporalPosition() retourne une valeur sur la base de la relation suivante :

$$Tl = Tt - Ttb + Tlb$$

On voit ici, que pour l'objet OD, le temps logique est uniquement dérivé du temps codé vu que celui-ci intègre déjà les variations de vitesse.

Par ces deux relations définissant respectivement le temps logique pour un objet statique et le temps logique pour un objet dynamique, il est possible de coordonner (ou synchroniser) la présentation des composantes à caractère statique et des composantes à caractère dynamique d'un document multimédia en assurant l'égalité Tl(CO)=Tl(OS)=Tl(OD).

Chaque lecture ultérieure du temps logique d'un objet, via la méthode GetTemporalPosition( ), permet de récupérer un temps logique Tl en conformité avec la vitesse courante de présentation du document multimédia même en cas de changement demandé par l'utilisateur du système.

A noter que pour l'objet OD, la valeur du temps codé courant Tt est aussi récupérée via une méthode d'objet.

Les différentes méthodes d'objet ci-dessus font partie du moteur logiciel multimédia et peuvent être implémentées dans les objets CO,OD et OS.

**Revendications**

1. Une méthode pour synchroniser dans un système de présentation de documents multimédia interactifs, la présentation de composantes à caractère dynamique et de composantes à caractère statique d'un tel document, **caractérisée par** les étapes consistant à :

   - représenter, dans le système de présentation de documents multimédia interactifs, le document et ses composantes dynamiques et statiques suivant un modèle orienté objet pour définir le document multimédia interactif sous la forme d'un premier objet (CO) dit objet multimédia racine, chaque composante à caractère dynamique de ce document sous la forme d'un second objet (OD) dit objet monomédia dynamique et chaque composante à caractère statique de ce document sous la forme d'un troisième objet (OS) dit objet monomédia statique,

   - fournir dans l'objet multimédia racine (CO) et dans chaque objet monomédia dynamique (OD) ou statique (OS) des premières données de synchronisation (Tl,Tle,Tlb) relatives à des instants de présentation du document dans un référentiel temporel logique pour une certaine vitesse de présentation du document multimédia, ce référentiel temporel logique étant dérivé d'un référentiel temporel codé fourni par un support (4) d'enregistrement des composantes à caractère dynamique du document,

- fournir dans l'objet multimédia racine (CO) et dans chaque objet monomédia statique (OS) une seconde donnée de synchronisation (Tli) relative à un instant de changement de vitesse de présentation du document dans le référentiel temporel logique,
- fournir dans l'objet multimédia racine (CO) et dans chaque objet monomédia statique (OS) une troisième donnée de synchronisation (Tp) relative à un instant de présentation du document dans un référentiel temporel physique fourni par une horloge (7),
- fournir dans l'objet multimédia racine (CO) et dans chaque objet monomédia statique (OS) une quatrième donnée de synchronisation (Tpi) relative à un instant de changement de vitesse de présentation du document dans le référentiel temporel physique,
- fournir dans chaque objet monomédia dynamique (OD) des cinquièmes données de synchronisation (Tt, Ttb, Tte) relatives à des instants de présentation du document dans le référentiel temporel codé, et
- traiter ces différentes données de synchronisation à chaque changement de vitesse de présentation du document multimédia pour coordonner la présentation des composantes à caractère dynamique et des composantes à caractère statique de celui-ci.


## Patentansprüche

1. Verfahren, um in einem Präsentationssystem für interaktive Multimediadokumente die Präsentation von dynamischen Komponenten und statischen Komponenten eines solchen Dokuments zu synchronisieren, **gekennzeichnet durch** die Schritte, welche bestehen aus:

- Darstellen des Dokuments und seiner dynamischen und statischen Komponenten in dem Präsentationssystem für interaktive Multimediadokumente nach einem objektorientierten Modell, um das interaktive Multimediadokument in Form eines ersten Objekts (CO) zu definieren, das als Multimedia-Wurzelobjekt bezeichnet wird, sowie jeder dynamischen Komponente dieses Dokuments in Form eines zweiten Objekts (OD), das als dynamisches Monomediaobjekt bezeichnet wird, und jeder statischen Komponente dieses Dokuments in Form eines dritten Objekts (OS), das als statisches Monomediaobjekt bezeichnet wird;
- Liefern von ersten Synchronisationsdaten (T1, Tle, Tlb) in dem Multimedia-Wurzelobjekt (CO) und in jedem dynamischen (OD) oder statischen (OS) Monomediaobjekt, die sich auf Präsentationszeitpunkte des Dokuments in einem logischen zeitlichen Bezugssystem für eine bestimmte Präsentationsgeschwindigkeit des Multimediadokuments beziehen, wobei dieses logische zeitliche Bezugssystem von einem codierten zeitlichen Bezugssystem abgeleitet ist, welches von einem Aufzeichnungsträger (4) der dynamischen Komponenten des Dokuments geliefert wird;
- Liefern eines zweiten Synchronisationswertes (Tli) in dem Multimedia-Wurzelobjekt (CO) und in jedem statischen Monomediaobjekt (OS), der sich auf einen Zeitpunkt des Wechsels der Präsentationsgeschwindigkeit des Dokuments in dem logischen zeitlichen Bezugssystem bezieht;
- Liefern eines dritten Synchronisationswertes (Tp) in dem Multimedia-Wurzelobjekt (CO) und in jedem statischen Monomediaobjekt (OS), der sich auf einen von einer Uhr (7) gelieferten Präsentationszeitpunkt des Dokuments in einem physischen zeitlichen Bezugssystem bezieht;
- Liefern eines vierten Synchronisationswertes (Tpi) in dem Multimedia-Wurzelobjekt (CO) und in jedem statischen Monomediaobjekt (OS), der sich auf einen Zeitpunkt des Wechsels der Präsentationsgeschwindigkeit des Dokuments in dem physischen zeitlichen Bezugssystem bezieht;
- Liefern von fünften Synchronisationsdaten (Tt, Ttb, Tte) in jedem dynamischen Monomediaobjekt (OD), die sich auf Präsentationszeitpunkte des Dokuments im codierten zeitlichen Bezugssystem beziehen; und
- Verarbeiten dieser verschiedenen Synchronisationsdaten bei jeder Änderung der Präsentationsgeschwindigkeit des Multimediadokuments, um die Präsentation der dynamischen Komponenten und der statischen Komponenten dieses Dokuments zu koordinieren.


## Claims

1. A method of synchronising the presentation of components of a dynamic nature and components of a static nature of an interactive multimedia document in a system for presentation of such documents, including the following steps:

- representing the document and its dynamic and static components in the interactive multimedia document presentation system using an object-oriented model to define the interactive multimedia document in the form of a first object (CO) called a root multimedia object, each component of a dynamic nature of said document in the form of a second object (OD) called a dynamic monomedia object and each component of a static nature of said document in the form of a third object (OS) called a static monomedia object,

- providing in the root multimedia object (CO) and in each dynamic (OD) or static (OS) monomedia object synchronization first data (TL, Tle, Tlb) relating to times of presentation of the document in a logical temporal frame of reference for a certain speed of presentation of the multimedia document, said logical temporal frame of reference being derived from a coded temporal frame of reference supplied by a storage medium (4) for components of a dynamic nature of the document,

- providing in the root multimedia object (CO) and in each static monomedia object (OS) synchronization second data (Tli) relating to a time of change of speed of presentation of the document in the logical temporal frame of reference,

- supplying in the root multimedia object (CO) and in each static monomedia object (OS) synchronization third data (Tp) relating to a time of presentation of the document in a physical temporal frame of reference supplied by a clock (7),

- supplying in the root multimedia object (CO) and in each static monomedia object (OS) synchronization fourth data (Tpi) relating to a time of change of speed of presentation of the document in the physical temporal frame of reference,

- supplying in each dynamic monomedia object (OD) synchronization fifth data (Tt, Ttb, Tte) relating to times of presentation of the document in the coded temporal frame of reference, and

- processing the various synchronization data on each change of speed of presentation of the multimedia document to coordinate the presentation of the components of a dynamic nature and the components of a static nature thereof.

# FIG. 1

# FIG. 2

# FIG. 3

TEXT

AVS

DOC MULTIMEDIA

t

0   10   20                    80   100   120

# FIG. 4

$$CO \begin{cases} Tl \\ Tlb = 0 \\ Tle = 120 \\ Vi \\ Tli \\ Tp \\ Tpi \end{cases}$$

$$OD \begin{cases} Tl \\ Tlb = 10 \\ Tle = 100 \\ Vi \\ Tli \\ Tp \\ Tpi \end{cases}$$

$$OS \begin{cases} Tl \\ Tlb = 20 \\ Tle = 80 \\ Vi \\ Tt \\ Ttb \\ Tte \end{cases}$$

# FIG. 5

# FIG. 6